# EUROPÄISCHE PATENTSCHRIFT

(11) **EP 1 601 810 B1**
(45) Veröffentlichungstag und Bekanntmachung des Hinweises auf die Patenterteilung: **30.03.2011**
(21) Anmeldenummer: 04708710.1
(22) Anmeldetag: 06.02.2004
(51) Int. Cl.: C23C 4/02, C23C 4/18, H01M 8/12

(54) **VERFAHREN ZUR HERSTELLUNG EINES SCHICHTSYSTEMS UMFASSEND EINEN METALLISCHEN TRÄGER UND EINE ANODENFUNKTIONSSHICHT**
METHOD FOR PRODUCING A LAYER SYSTEM COMPRISING A METALLIC CARRIER AND AN ANODE FUNCTIONAL LAYER
PROCEDE DE FABRICATION D'UN SYSTEME A COUCHES COMPORTANT UN SUPPORT METALLIQUE ET UNE COUCHE A FONCTION D'ANODE

(30) Priorität: 07.03.2003 DE 10309968
(43) Veröffentlichungstag der Anmeldung: 07.12.2005
(73) Patentinhaber: Forschungszentrum Jülich GmbH, 52425 Jülich (DE)
(72) Erfinder: VASSEN, Robert, 52134 Herzogenrath (DE); HATHIRAMANI, Dag, 52428 Jülich (DE); BUCHKREMER, Hans, Peter, 52525 Heinsberg (DE); TIETZ, Frank, 52428 Jülich (DE); DÖRING, Jens-Erich, 41539 Dormagen (DE); SIEGERT, Roberto, 52428 Jülich (DE); TRAEGER, Franziska, 44789 Bochum (DE); STÖVER, Detlev, 52382 Nierderzier (DE)
(86) Internationale Anmeldenummer: PCT/DE2004/000198
(87) Internationale Veröffentlichungsnummer: WO 2004/079033

(56) Entgegenhaltungen:
- EP-A- 0 545 695
- EP-A- 0 794 265
- EP-A- 1 261 059
- DE-A- 4 228 779
- GB-A- 2 016 361

## Beschreibung

Die Erfindung betrifft ein Verfahren zur Herstellung eines Schichtsystems, insbesondere zur Herstellung eines Schichtsystems, umfassend wenigstens einen metallischen Träger und eine Anodenfunktionsschicht. Ein solches Schichtsystem wird regelmäßig in Hochtemperatur-Brennstoffzellen eingesetzt.

### Stand der Technik

Zur Herstellung einzelner Komponenten für eine Hochtemperatur- Brennstoffzelle haben sich unterschiedliche Verfahren als geeignet herausgestellt. Zu diesen Verfahren gehören unter anderem das atmosphärische Plasmaspritzen, das Vakuumplasmaspritzen und das Hochgeschwindigkeitsflammspritzen. Das Plasmaspritzen ist eine moderne Technik, um insbesondere Oberflächen von Bauteilen mit Schichten zu versehen, die spezielle Eigenschaften aufweisen. Als Träger für die Schichten (Substrate) können verhältnismäßig viele Werkstoffe verwendet werden. Bei der Herstellung der Schichten werden pulverförmige Teilchen in einem heißen Plasmastrahl aufgeschmolzen, beschleunigt und dadurch auf die Substratoberfläche gespritzt. Dort erstarren sie und bleiben haften. Durch wiederholtes Aufbringen von Teilchen können auch Schichten großer Dicke hergestellt werden.

Ein Problem bei der Verwendung von thermischen Spritzprozessen zur Herstellung einzelner Brennstoffzellenkomponenten ist, dass man einen Träger in Form eines Substrats zur Beschichtung verwenden muss. Dazu werden derzeit in der Regel Gestricke aus metallischen Fasern oder metallische Filze oder poröse pulvermetallurgisch hergestellte Platten verwendet. Auf diese Strukturen (Träger) wird dann die erste funktionelle Schicht, z. B. die Anode, aufgebracht.

Als nachteilig sind hier die hohen Kosten für diese Substrate und eine aufwendige Fertigungstechnik zu nennen.

Aus GB 2 016 361 A ist ein Verfahren zur Herstellung eines Schichtsystems bekannt, bei dem ein Metallpulver und eine keramische Schicht (Ni/ZrO₂) aufeinanderfolgend auf eine Unterlage mit Hilfe eines thermischen Spritzverfahrens aufgebracht werden und wobei die Unterlage anschließend zersetzt wird.

In EP 0 794 265 A2 und auch in DE 42 25 779 A1 werden jeweils Verfahren zur Herstellung eines Formteils für eine Hochtemperatur- Brennstoffzelle offenbart, bei dem die Auftragung einer Schicht aus Gefügematerial mittels Plasmaspritzen auf eine als Substrat dienende Negativform erfolgt. Vorteilhaft lässt sich die Schicht nach deren Herstellung zerstörungsfrei von der Negativform ablösen.

Substrate, die über pulvertechnologische Formgebungsverfahren aus Verbundwerkstoffen wie Ni/YSZ (Yttriumoxid stabilisiertes Zirkonoxid) oder NiO/YSZ hergestellt werden, weisen den Nachteil auf, dass sie mechanisch nicht sehr stabil sind. Bei der Herstellung eines solchen Schichtsystems für die Hochtemperatur- Brennstoffzelle über thermische Spritzverfahren kommt es regelmäßig zu großen Temperaturschwankungen, die nachteilig enorme thermische Spannungen in den Substraten erzeugen und zu deren Bruch führen können.

Zusätzliche Probleme, die bei den bislang gebräuchlichen Trägersubstraten auftreten, werden durch die relativ grobe Porosität hervorgerufen, die üblicherweise mit dem Plasmaspritzen eingestellt wird. Dies führt nachteilig zu unzureichenden elektrochemischen Leistungsdaten der Brennstoffzelle.

### Aufgabe und Lösung

Aufgabe der Erfindung ist es, ein geeignetes Trägersubstrat, insbesondere für die Herstellung von Brennstoffzellenkomponenten zu schaffen. Eine weitere Aufgabe der Erfindung ist es, ein kostengünstiges und einfaches Verfahren zur Herstellung eines solchen Trägersubstrates zur Verfügung zu stellen.

Die Aufgaben der Erfindung werden gelöst durch ein Verfahren mit der Gesamtheit an Merkmalen gemäß Hauptanspruch. Vorteilhafte Ausgestaltungen des Verfahrens finden sich in den darauf rückbezogenen Unteransprüchen.

### Gegenstand der Erfindung

Die dieser Erfindung zugrunde liegende Idee basiert auf der Vorstellung, dass nicht nur die einzelnen Funktionsschichten einer Hochtemperatur-Brennstoffzelle vorteilhaft mit Hilfe des Plasmaspritzens hergestellt werden können, sondern auch das dazu notwendige Trägersubstrat.

Bei dem hier beschriebenen erfindungsgemäßen Verfahren wird vorteilhaft das eigentliche Substrat, im folgenden als Trägerstruktur bezeichnet, direkt über einen thermischen Spritzprozess gefertigt. Zur Herstellung dieser Trägerstruktur wird ein geeignetes Metallpulver über ein thermisches Spritzverfahren auf eine Unterlage gespritzt. Bevorzugt ist diese Unterlage mit einer leicht entfernbaren Beschichtung (Trennschicht) versehen. Diese auflösbare Trennschicht ermöglicht auf einfache Weise das Ablösen des Trägersubstrates nach dem Beschichtungsvorgang. Sie kann z. B. als ein Kunststoffüberzug ausgestaltet sein, der durch einen Tauch- oder Sprühprozess aufgebracht wurde. Die Entfernung würde in einem solchen Fall dann thermisch erfolgen. Eine Trennschicht kann aber auch eine Salzschicht sein, die z. B. durch Eintrocknung von Lösungen oder auch über thermische Spritzverfahren abgeschieden wurde. In einem solchen Fall würde die Trennschicht durch ein geeignetes Lösungsmittel (z. B. Wasser) entfernt werden können. Alternativ kann die Trägerstruktur auch durch mechanische Bearbeitung (Sägen oder Abhebeln) vom Substrat getrennt werden.

Die Trägerstruktur selbst wird über das Spritzen eines Metallpulvers hergestellt, welches insbesondere für die Herstellung von Brennstoffzellenkomponenten folgende Eigenschaften aufweist. Es sollte vorteilhaft einen Ausdehnungskoeffizienten aufweisen, der den übrigen Brennstoffzellenkomponenten angepasst ist, d. h. etwa 10 - 13*10⁻⁶/K. Ferner sollte sich auf der Oberfläche bei hohen Temperaturen unter oxidierenden Bedingungen eine Oxidhaut ausbilden, die elektrisch leitfähig ist. Bevorzugt werden für diese Anwendung ferritische Stähle, die eine Chrom- oder Manganoxiddeckschicht ausbilden. Alternativ können auch Chrombasislegierungen, z. B. auf CrFeY-Basis, Verwendung finden. Die Trägerstruktur sollte eine hohe, offene Porosität aufweisen (insbesondere größer als 15 %), um dem Gastransport keinen großen Widerstand entgegen zu setzen. Entsprechende Porositäten lassen sich leicht über das thermische Beschichten einstellen. Bevorzugt sind dabei grobe Pulver (Korngrößen > 50 µm) zu verwenden, die mit eher kalten Spritzbedingungen, d. h. nur teilweisem Aufschmelzen der Metallpartikel abgeschieden werden. Eine zusätzliche Erhöhung der Porosität ist durch Einbringung organischer Komponenten (z. B. Polyester) oder Kohlenstoff oder andere geeignete Platzhalter, während des thermischen Spritzens, möglich. Diese organischen Komponenten oder Platzhalter können nachträglich durch eine thermische Behandlung leicht entfernt werden. Günstige Schichtdicken für die Trägerstrukturen liegen insbesondere zwischen 0,3 und 3 mm.

Nach dem Aufbringen der Trägerstruktur auf einer Unterlage wird diese mit einer Anodenfunktionsschicht, z. B. aus einem vollstabilisierten Zirkonoxid (YSZ) mit Nickel oder Nickeloxid Zusatz mit Hilfe eines thermischen Spritzverfahrens beschichtet. Die Gewichtsverhältnisse von YSZ und Nickel, bzw. Nickeloxid sollten vorteilhaft bei etwa 50 %/50 % liegen. Eine besonders feine Porosität lässt sich dabei über die Verwendung von Suspensionen als Startmaterialien für das thermische Spritzen erzielen (thermisches Suspensionsspritzen). Auf diese Weise lässt sich das aufzubringende Material (z. B. 8YSZ/NiO) als Pulver mit relativ kleinen (< 1 µm) dem Spritzprozess zuführen. Bevorzugte Schichtdicken liegen zwischen 5 und 50 µm.

Danach kann die Anodenfunktionsschicht optional über thermische Spritzverfahren mit einem dichten Elektrolyten versehen werden. Bevorzugte Materialien für einen geeigneten Elektrolyten sind auch hier vollstabilisierte Zirkoniumoxide (z. B. YSZ). Die Dichtigkeit des Elektrolyten wird durch geeignete Spritzparameter eingestellt. Wichtig ist hierbei auch eine hohe Substrattemperatur (T > 200°C), möglichst heiße Spritzparameter, d. h. möglichst vollständiges Aufschmelzen der Partikel, sowie eine hohe Schichtdicke pro Übergang (> 5 µm), da diese Parameter die Vermeidung von Mikrorissen begünstigen und damit eine dichte Schichtabscheidung ermöglichen. Allerdings sind die Parameter so zu wählen, dass Segmentierungsrisse, wie sie regelmäßig bei zu hohen Schichtdicken auftreten können, verhindert werden. Das metallische Trägersubstrat bietet gegenüber konventionellen Anodensubstraten auf NiO/YSZ-Basis und generell gegenüber keramischen Materialien den entscheidenden Vorteil, dass dieses thermisch stark belastet werden kann und damit die erforderlichen heißen Spritzbedingungen einstellbar sind. Falls die Porosität des Elektrolyten noch weiter reduziert werden soll, ist eine thermische Nachbehandlung der Schichten möglich. Alternativ kann auch hier das thermische Suspensionsspritzen eingesetzt werden, da die verwendeten feinen Partikel bei geeigneter Prozessführung eine dichte Schichtabscheidung ermöglichen. Die Schichtdicken liegen im Bereich zwischen 5 und 100 µm.

Als weitere, optionale Schicht wird über das thermische Spritzen die Kathodenfunktionsschicht, z. B. eine Mischung aus Perowskit (z. B. La_{0.65}Sr_{0.3}MnO₃ oder La/Sr/Fe/Co-Basis Perowskite) mit YSZ, abgeschieden. Als typische Schichtdicken sind hierbei Dicken zwischen 5 und 50 µm zu nennen. Auch hier können fein-poröse Strukturen gezielt über das thermische Suspensionsspritzen eingestellt werden.

Als letzte Schicht für eine Hochtemperatur-Brennstoffzelle wird optional die Kathode aus Perowskit (z. B. La_{0.65}Sr_{0.3}MnO₃) durch thermische Spritzverfahren aufgebracht. Hier werden, ähnlich wie bei der Trägersubstratherstellung, primär grobe Pulver (> 50 µm) bei kalten Spritzparametern verarbeitet. Auch hier ist die Verwendung von organischen Komponenten zur Erhöhung der Porosität möglich.

### Spezieller Beschreibungsteil

Nachfolgend wird der Gegenstand der Erfindung anhand von drei Figuren und einem Ausführungsbeispiel näher erläutert, ohne dass der Gegenstand der Erfindung dadurch beschränkt wird.

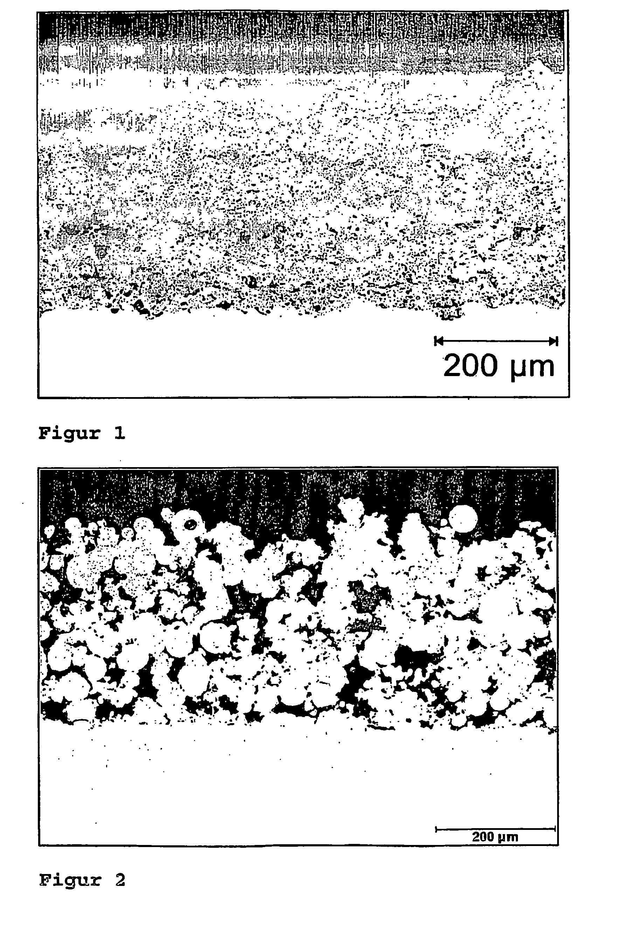

Es zeigen
- Figur 1:: Abbildung einer durch Plasmaspritzen herge- stellten Trägerschicht aus einem ferritischen Stahl mit einer Porosität von ca. 22 %.
- Figur 2:: Abbildung einer durch atmosphärisches Plas- maspritzen unter Zugabe von Polyester herge- stellten Trägerschicht aus Zirkoniumoxid mit einer Porosität von ca. 33 %.

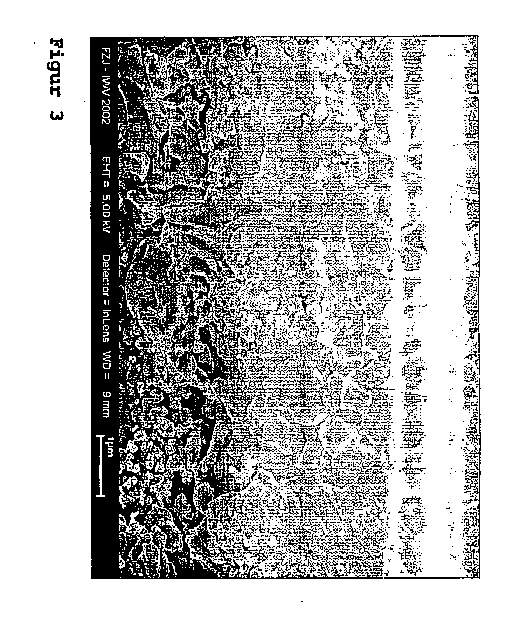

- Figur 3:: Abbildung einer durch Suspensionsplasmasprit- zen hergestellten fein-porösen Schicht aus vollstabilisiertem Zirkoniumoxid (YSZ).

### Ausführungsbeispiel:

Über das atmosphärische Plasmaspritzen mit einem F4-Brenner wird eine Cr5FeY-Legierung auf ein mit Polymer beschichtetes Stahlsubstrat aus ST37 abgeschieden. Als organische Zusatzkomponente beim Spritzen wird Polyester verwendet. Die Verwendung kalter Prozessparameter (Leistung ca. 40 kW, 120 mm Spritzabstand) in Verbindung mit der Polyestereinbringung erlaubt die Einstellung einer Porosität von deutlich über 30 % nach dem Ausbrennen des Polyesters. Die Schichtdicke beträgt ca. 1 mm.

Auf diese Schicht wird über das atmosphärische Suspensionsplasmaspritzen eine fein-poröse Schicht (Porosität > 25 %) aus 55% NiO/45 % YSZ abgeschieden. Der Feststoffgehalt der Suspension liegt bei 25 Gew.-%. Der Spritzabstand beträgt 70 mm bei einer Leistung des F4-Brenners von 47 kW.

Die Elektrolytabscheidung erfolgt mit Hilfe des atmosphärischen Plasmaspritzens unter Verwendung von feinkörnigem, geschmolzenem gebrochenem YSZ-Pulver. Die Substrattemperatur beträgt dabei ca. 350°C. Die Brennerleistung liegt bei 50 kW, der Spritzabstand bei 80 mm. Die eingestellte Schichtdicke beträgt 50 µm.

Im Anschluss daran wird durch das atmosphärische Suspensionsplasmaspritzen die Kathodenfunktionsschicht als eine fein-poröse Schicht (Porosität > 25 %) abgeschieden. Die verwendete Suspension besteht aus La_{0.65}Sr_{0.3}MnO₃/YSZ mit einem Feststoffgehalt von etwa 25 Gew. %. Die Schichtdicke liegt bei 30 µm. Der Spritzabstand beträgt 70 mm bei einer Leistung des F4-Brenners von 47 kW.

Die letzte Schicht wird wieder über das atmosphärische Plasmaspritzen mit Zusatz von Polyesterpulver hergestellt. Kalte Spritzparameter in Verbindung mit dem auszubrennenden Polyester führen zu Porositäten von > 30 %. Das Polyesterpulver wird über einen separaten Injektor in einen relativ kalten Bereich der Plasmaflamme eingeleitet, damit ein Verbrennen im Plasma vermieden wird. Die Schichtdicke beträgt 50 µm.

Als letzter Verfahrensschritt wird das Schichtsystem bei 600°C an Luft zum Loslösen von der Unterlage und zur Entfernung des Polyester ausgelagert, alternativ kann das Ausbrennen auch bei Start der Brennstoffzelle erfolgen.

## Patentansprüche

1. Verfahren zur Herstellung einer Träger-gestützten Hochtemperatur-Brennstoffzelle, bei dem eine Anodenfunktionsschicht mit Hilfe eines thermischen Spritzverfahrens auf einem porösen, metallischen Träger aufgebracht wird,
**dadurch gekennzeichnet,**
**dass** Metallpulver zur Ausbildung des porösen metallischen Trägers selbst mit Hilfe eines thermischen Spritzverfahrens zunächst auf eine Unterlage aufgebracht wird, und nach dem Aufbringen der Anodenfunktionsschicht auf dem so hergestellten metallischen Träger die Unterlage vom Schichtsystem abgelöst wird.

2. Verfahren nach Anspruch I, bei dem auf der Unterlage vor dem Aufbringen der Trägerschicht eine Zwischenschicht aufgebracht wird, und das Ablösen des Schichtsystems von der Unterlage durch Entfernung bzw. Auflösung der Zwischenschicht erfolgt.

3. Verfahren nach Anspruch 1 bis 2, bei dem als Unterlage oder Zwischenschicht eine Kunststoffschicht gewählt wird, die zur Ablösung des Schichtsystems bei Temperaturen oberhalb von 300 °C thermisch zersetzt wird.

4. Verfahren nach Anspruch 2, bei dem als Unterlage oder als Zwischenschicht eine Salzschicht gewählt wird, die zur Lösung des Schichtsystems durch ein Lösungsmittel aufgelöst wird.

5. Verfahren nach Anspruch 1, bei dem das Ablösen des Schichtsystems durch mechanische Bearbeitung, beispielsweise Sägen oder Abhebeln erfolgt.

6. Verfahren nach Anspruch 1 bis 5, bei dem ein Metallpulver für die Trägerschicht mit einem thermischen Ausdehnungskoeffizienten zwischen 10*10⁻⁶/K und 13*10⁻⁶/K eingesetzt wird.

7. Verfahren nach einem der vorhergehenden Ansprüche 1 bis 6, bei dem für die Ausbildung der Trägerschicht ein Metallpulver, umfassend einen ferritischen Stahl oder eine Chrombasislegierung, eingesetzt wird.

8. Verfahren nach einem der vorhergehenden Ansprüche 1 bis 7, bei dem eine Trägerschicht mit einer Porosität von mehr als 15 %, insbesondere von mehr als 20 % ausgebildet wird.

9. Verfahren nach einem der vorhergehenden Ansprüche 1 bis 8, bei dem neben dem Metallpulver wenigstens eine weitere organische Komponente zur Ausbildung der Trägerschicht eingesetzt wird.

10. Verfahren nach vorhergehendem Anspruch 9, bei dem neben Metallpulver Polyester oder Kohlenstoff als weitere organische Komponente eingesetzt wird.

11. Verfahren nach einem der vorhergehenden Ansprüche 9 bis 10, bei dem die weitere organische Komponente nach der Ausbildung der Trägerschicht thermisch zumindest weitestgehend entfernt wird.

12. Verfahren nach einem der vorhergehenden Ansprüche 1 bis 11, bei dem als weitere Komponente zur Ausbildung der zweiten Schicht vollstabilisiertes Zirkoniumoxid und Nickel oder Nickeloxid eingesetzt wird.

13. Verfahren nach Anspruch 12, bei vollstabilisiertes Zirkoniumoxid und Nickel oder Nickeloxid mit einer Korngröße kleiner als 5 µm, insbesondere kleiner als 1 µm eingesetzt werden.

14. Verfahren nach einem der vorhergehenden Ansprüche 1 bis 13, bei dem die zweite Schicht mit Hilfe eines thermischen Suspensionsspritzverfahrens aufgebracht wird.

15. Verfahren nach Anspruch 1 bis 14, bei dem mit Hilfe eines thermischen Spritzverfahrens eine Elektrolytschicht als dritte Schicht auf die Anodenfunktionsschicht aufgebracht wird.

16. Verfahren nach Anspruch 15, bei dem vollstabilisiertes Zirkoniumoxid für die dritte Schicht eingesetzt wird.

17. Verfahren nach einem der vorhergehenden Ansprüche 15 bis 16, bei dem während des Aufbringens der dritten Schicht Temperaturen oberhalb von 180 °C, insbesondere oberhalb von 200 °C eingestellt werden.

18. Verfahren nach einem der vorhergehenden Ansprüche 15 bis 17, bei dem die dritte Schicht mit einer Schichtdicke von wenigstens 5 µm, insbesondere von wenigstens 20 µm aufgebracht wird.

19. Verfahren nach einem der vorhergehenden Ansprüche 15 bis 18, bei dem die dritte Schicht mit Hilfe eines thermischen Suspensionsspritzverfahrens aufgebracht wird.

20. Verfahren nach Anspruch 15 bis 19, bei dem mit Hilfe eines thermischen Spritzverfahrens eine Kathodenfunktionsschicht als vierte Schicht auf dieElektrolytschicht aufgebracht wird.

21. Verfahren nach Anspruch 20, bei dem eine Mischung aus einem Perowskit und vollstabilisiertem Zirkoniumoxid für die vierte Schicht eingesetzt wird.

22. Verfahren nach einem der vorhergehenden Ansprüche 20 bis 21, bei dem die vierte Schicht mit einer Schichtdicke von wenigstens 5 µm, insbesondere von wenigstens 20 µm aufgebracht wird.

23. Verfahren nach einem der vorhergehenden Ansprüche 20 bis 22, bei dem die vierte Schicht mit Hilfe eines thermischen Suspensionsspritzverfahrens aufgebracht wird.

24. Verfahren nach Anspruch 20 bis 23, bei dem mit Hilfe eines thermischen Spritzverfahrens eine fünfte Schicht auf die Kathodenfunktionsschicht aufgebracht wird.

25. Verfahren nach Anspruch 24, bei dem wenigstens ein Perowskit für die fünfte Schicht eingesetzt wird.

26. Verfahren nach einem der vorhergehenden Ansprüche 24 bis 25, bei dem Pulver mit einer Korngröße größer als 50 µm für die fünfte Schicht eingesetzt werden.

27. Verfahren nach einem der vorhergehenden Ansprüche 24 bis 26, bei dem neben dem Perowskitpulver wenigstens eine weitere organische Komponente zur Ausbildung der fünften Schicht eingesetzt wird.

## Claims

1. Method for producing a carrier supported high temperature fuel cell, whereby an anode functional layer is applied to a porous, metallic carrier with the aid of a thermal spray method, **characterised in that** metal powder for forming the porous, metallic carrier itself is initially applied onto a base with the aid of a thermal spray method, and the base then separated from the layer system following the application of the anode functional layer onto the metallic carrier produced in this way.

2. Method according to Claim 1, whereby an interim layer is applied onto the base prior to applying the carrier layer, and the separation of the layer system from the base is realised by means of removing or dissolving the interim layer.

3. Method according to Claims 1 to 2, whereby a plastic layer is selected as a base or interim layer, the same being thermally decomposed at temperatures above 300°C for separating the layer system.

4. Method according to Claim 2, whereby a salt layer is selected as a base or as an interim layer, the same being dissolved by means of a solvent for separating the layer system.

5. Method according to Claim 1, whereby the separating of the layer system is realised by means of mechanical processing, for example sawing or lifting.

6. Method according to Claims 1 to 5, whereby a metal powder with a thermal expansion coefficient of between 10*10⁻⁶/K and 13*10⁻⁶/K is used for the carrier layer.

7. Method according to one of the preceding Claims 1 to 6, whereby a metal powder, comprising a ferritic steel or a chrome base alloy, is used for forming the carrier layer.

8. Method according to one of the preceding Claims 1 to 7, whereby a carrier layer with a porosity of more than 15%, in particular of more than 20%, is formed.

9. Method according to one of the preceding Claims 1 to 8, whereby at least one further organic component is used in addition to the metal powder for forming the carrier layer.

10. Method according to the preceding Claim 9, whereby polyester or carbon is used as an additional organic component in addition to metal powder.

11. Method according to one of the preceding Claims 9 to 10, whereby the additional organic component is thermally removed at least as far as possible following the formation of the carrier layer.

12. Method according to one of the preceding Claims 1 to 11, whereby fully stabilised zirconium oxide and nickel or nickel oxide is used as an additional component for the formation of the second layer.

13. Method according to Claim 12, whereby fully stabilised zirconium oxide and nickel or nickel oxide with a grain size of less than 5 µm, in particular less than 1 µm, is used.

14. Method according to one of the preceding Claims 1 to 13, whereby the second layer is applied with the aid of a thermal suspension spray method.

15. Method according to Claims 1 to 14, whereby an electrolyte layer is applied onto the anode functional layer as a third layer with the aid of a thermal spray method.

16. Method according to Claim 15, whereby fully stabilised zirconium oxide is used for the third layer.

17. Method according to one of the preceding Claims 15 to 16, whereby temperatures of more than 180°C, in particular of more than 200°C, are set during the application of the third layer.

18. Method according to one of the preceding Claims 15 to 17, whereby the third layer is applied with a layer thickness of at least 5 µm, in particular of at least 20 µm.

19. Method according to one of the preceding Claims 15 to 18, whereby the third layer is applied with the aid of a thermal suspension spray method.

20. Method according to Claims 15 to 19, whereby a cathode functional layer is applied onto the electrolyte layer as a fourth layer with the aid of a thermal spray method.

21. Method according to Claim 20, whereby a mixture of a perovskite and fully stabilised zirconium oxide is used for the fourth layer.

22. Method according to one of the preceding Claims 20 to 21, whereby the fourth layer is applied with a layer thickness of at least 5 µm, in particular of at least 20 µm.

23. Method according to one of the preceding Claims 20 to 22, whereby the fourth layer is applied with the aid of a thermal suspension spray method.

24. Method according to Claims 20 to 23, whereby a fifth layer is applied onto the cathode functional layer with the aid of a thermal spray method.

25. Method according to Claim 24, whereby at least one perovskite is used for the fifth layer.

26. Method according to one of the preceding Claims 24 to 25, whereby powder with a grain size of more than 50 µm is used for the fifth layer.

27. Method according to one of the preceding Claims 24 to 26, whereby at least one additional organic component is used in addition to the perovskite powder for the formation of the fifth layer.

## Revendications

1. Procédé de préparation d'une cellule électrochimique haute température avec support, dans laquelle une couche à fonction d'anode est appliquée sur un support métallique poreux par un procédé de pulvérisation thermique,
**caractérisé en ce**
**que** la poudre métallique pour la formation du support métallique poreux est d'abord appliquée elle-même par un procédé de pulvérisation thermique, sur un substrat et en ce qu'après l'application de la couche à fonction d'anode sur le support métallique ainsi préparé, le substrat est séparé du système de couches.

2. Procédé selon la revendication 1, dans lequel une couche intermédiaire est appliquée sur le substrat avant l'application de la couche support, et la séparation du système de couches depuis le substrat est réalisée par élimination et respectivement, dissolution de la couche intermédiaire.

3. Procédé selon les revendications 1 à 2, dans lequel on choisit comme substrat ou couche intermédiaire, une couche en matière plastique, qui est décomposée thermiquement à des températures supérieures à 300°C pour la séparation du système de couches.

4. Procédé selon la revendication 2, dans lequel on choisit comme substrat ou couche intermédiaire, une couche de sel, qui est dissoute par un solvant pour la séparation du système de couches.

5. Procédé selon la revendication 1, dans lequel la séparation du système de couches est réalisée par un traitement mécanique, par exemple à la scie ou par démontage.

6. Procédé selon les revendications 1 à 5, dans lequel on met en oeuvre une poudre métallique ayant un coefficient de dilatation thermique situé dans l'intervalle allant de 10*10⁻⁶/K à 13-10⁻⁶/K.

7. Procédé selon l'une des revendications précédentes 1 à 6, dans lequel on met en oeuvre pour la formation de la couche support, une poudre métallique comprenant un acier ferritique ou un alliage à base de chrome.

8. Procédé selon l'une des revendications précédentes 1 à 7, dans lequel on forme une couche support avec une porosité de plus de 15 %, en particulier plus de 20 %.

9. Procédé selon l'une des revendications précédentes 1 à 8, dans lequel en plus de la poudre métallique, on met en oeuvre pour la formation de la couche support, au moins un autre composant organique.

10. Procédé selon la revendication 9, dans lequel on met en oeuvre en plus de la poudre métallique, un polyester ou du carbone comme autre composant organique.

11. Procédé selon l'une des revendications précédentes 9 à 10, dans lequel l'autre composant organique est éliminé thermiquement, le plus possible, après la formation de la couche support.

12. Procédé selon l'une des revendications précédentes 1 à 11, dans lequel comme autre composant pour la formation de la deuxième couche, on met en oeuvre de l'oxyde de zirconium complètement stabilisé et du nickel ou de l'oxyde de nickel.

13. Procédé selon la revendication 12, dans lequel on met en oeuvre l'oxyde de zirconium complètement stabilisé et le nickel ou l'oxyde de nickel ayant une granulométrie inférieure à 5 µm, en particulier inférieure à 1 µm.

14. Procédé selon l'une des revendications précédentes 1 à 13, dans lequel la deuxième couche est appliquée à l'aide d'un procédé de pulvérisation thermique de suspension.

15. Procédé selon l'une des revendications précédentes 1 à 14, dans lequel à l'aide d'un procédé de pulvérisation, une couche d'électrolyte est appliquée comme troisième couche, sur la couche à fonction d'anode.

16. Procédé selon la revendication 15, dans lequel l'oxyde de zirconium complètement stabilisé est mis en oeuvre pour la troisième couche.

17. Procédé selon l'une des revendications précédentes 15 à 16, dans lequel pendant l'application de la troisième couche, des températures supérieures à 180°C, en particulier supérieures à 200°C sont réglées.

18. Procédé selon l'une des revendications précédentes 15 à 17, dans lequel on applique la troisième couche avec une épaisseur de couche d'au moins 5 µm, en particulier d'au moins 20 µm.

19. Procédé selon l'une des revendications précédentes 15 à 18, dans lequel on applique la troisième couche par un procédé de pulvérisation thermique de suspension.

20. Procédé selon les revendications 15 à 19, dans lequel on applique une couche à fonction de cathode comme quatrième couche, sur la couche d'électrolyte, à l'aide d'un procédé de pulvérisation thermique.

21. Procédé selon la revendication 20, dans lequel on met en oeuvre un mélange de pérovskite et d'oxyde de zirconium complètement stabilisé pour la quatrième couche.

22. Procédé selon l'une des revendications précédentes 20 à 21, dans lequel la quatrième couche est appliquée avec une épaisseur de couche d'au moins 5 µm, en particulier au moins 20 µm.

23. Procédé selon l'une des revendications précédentes 20 à 22, dans lequel la quatrième couche est appliquée à l'aide d'un procédé de pulvérisation thermique de suspension.

24. Procédé selon l'une des revendications précédentes 20 à 23, dans lequel une cinquième couche est appliquée sur la couche à fonction de cathode à l'aide d'un procédé de pulvérisation thermique.

25. Procédé selon la revendication 24, dans lequel on met en oeuvre au moins une pérovskite pour la cinquième couche.

26. Procédé selon l'une des revendications précédentes 24 à 25, dans lequel on met en oeuvre une poudre ayant une granulométrie supérieure à 50 µm pour la cinquième couche.

27. Procédé selon l'une des revendications précédentes 24 à 26, dans lequel en plus de la poudre de pérovskite, on met en oeuvre au moins un autre composant organique pour la formation de la cinquième couche.
